# EUROPÄISCHE PATENTSCHRIFT

(11) **EP 0 862 496 B1**
(45) Veröffentlichungstag und Bekanntmachung des Hinweises auf die Patenterteilung: **02.02.2000**
(21) Anmeldenummer: 96933405.1
(22) Anmeldetag: 26.09.1996
(51) Int. Cl.: B01J 35/04, F01N 3/28, C21D 9/60

(54) **VERFAHREN UND VORRICHTUNG ZUM HERSTELLEN EINES WABENKÖRPERS AUS WÄRMEBEHANDELTEN ZWEI- ODER MEHRSCHICHTIGEN METALLFOLIEN**
METHOD AND DEVICE FOR PRODUCING A HONEYCOMBED BODY OF HEAT-TREATED TWO OR MULTILAYERED METAL FOILS
PROCEDE ET DISPOSITIF DE FABRICATION D'UN CORPS EN NIDS D'ABEILLES A PARTIR DE FEUILLES METALLIQUES COMPORTANT AU MOINS DEUX COUCHES

(30) Priorität: 02.10.1995 DE 19536752
(43) Veröffentlichungstag der Anmeldung: 09.09.1998
(73) Patentinhaber: Emitec Gesellschaft für Emissionstechnologie mbH, 53797 Lohmar (DE)
(72) Erfinder: WIERES, Ludwig, D-51491 Overath (DE); CASPAR, Hans-Peter, D-53844 Troisdorf (DE); KURTH, Ferdi, D-50939 Köln (DE); FAUST, Günther, D-51143 Köln (DE)
(74) Vertreter: Kahlhöfer, Hermann, Dipl.-Phys.
(86) Internationale Anmeldenummer: EP9604214
(87) Internationale Veröffentlichungsnummer: WO9712676

(56) Entgegenhaltungen:
- EP-A- 0 238 831
- EP-A- 0 348 576
- DE-U- 8 908 267
- US-A- 5 157 010

## Beschreibung

Die vorliegende Erfindung betrifft ein Verfahren zum Herstellen eines Wabenkörpers, insbesondere eines Trägerkörpers für katalytische Konverter von Abgasreinigungsanlagen, wie sie bei Kraftfahrzeugen bevorzugt eingesetzt werden. Der generelle Aufbau solcher Wabenkörper ist beispielsweise in der EP 0 454 712 B1 beschrieben. Diese Schrift beschreibt auch sogenannte transversale Mikrostrukturen, die zur Strömungsbeeinflußung und Verbesserung der Effektivität eines katalytischen Konverters eingesetzt werden. Wabenkörper werden aus Blechlagen - zumindest teilweise strukturierten - gewickelt, geschichtet oder verschlungen, wobei die Struktur der Blechlagen dabei zur Bildung von für ein Abgas durchlässigen Kanälen führt. Die Hauptstruktur bestimmt daher die Größe der Kanäle. Unter einer Mikrostruktur wird im folgenden wie im Stand der Technik eine Struktur wesentlich kleinerer Abmessungen als die Hauptstruktur verstanden, wobei diese Mirkostruktur bevorzugt im Winkel oder senkrecht zur Richtung der Kanäle im Wabenkörper angeordnet sein soll. Um eine so angeordnete Mikrostruktur herzustellen, ist es erforderlich, ein Metallfolienband in seiner Längsrichtung oder schräg dazu zu strukturieren, wozu eine erhebliche Kaltverformung erforderlich ist, wenn dies im kontinuierlichen Durchgang und ohne starke Veränderung der Breite des Metallfolienbandes erfolgen soll.

Aus der EP 0 159 468 B1, EP 0 238 831 A1, EP 0 348 576 A2 und der US 5,366,139 A sind aus zwei oder mehreren Schichten aufgebaute Metallfolien bekannt, die für die Herstellung metallischer Wabenkörper vorgesehen sind. Solche schichtweise aufgebauten Metallfolien können aus den gewünschten Legierungsbestandteilen gewalzt werden, wobei bevorzugt mit Aluminium walzplattierte Stahlbleche eingesetzt werden. Grundsätzlich ist es möglich, solche Folien nach dem Wälzen homogen zu glühen, wodurch ein für die Herstellung von metallischen Wabenkörpern in jeder Hinsicht geeigneter hochtemperaturkorrosionsfester Werkstoff entsteht. Diese Homogenglühung ist jedoch energieaufwendig und verteuert den an sich sehr kostengünstigen Walzprozeß.

Es wurde auch bereits vorgeschlagen, Wabenkörper aus noch nicht homogengeglühten walzplattierten Metallfolien herzustellen und die Homogenglühung gleichzeitig mit einem später ohnehin erforderlichen Lötprozeß zu verbinden. Diese Variante ist vom Energieeinsatz her günstiger, jedoch setzt sie voraus, daß die zur Strukturierung der Metallbleche notwendigen Schritte an einer nicht wärmebehandelten walzplattierten Folie durchgeführt werden können. Es hat sich jedoch herausgestellt, daß bestimmte Fertigungsschritte, insbesondere die Herstellung von Mikrostrukturen, sich wegen der geringen Kaltverformbarkeit des walzplattierten Materials nicht problemlos durchführen lassen, da walzplattierte Metallfolien sich nicht um mehr als 1 % kaltverformen lassen, ohne zu reißen.

Schließlich sind auch Herstellungsverfahren für Wabenkörper bekannt, bei denen am Ende nicht der ganze Wabenkörper gelötet und damit einem Wärmebehandlungsverfahren unterzogen wird. So können beispielsweise Wabenkörper, wie sie in der WO 89/07 488 beschrieben sind oder andere Wabenkörper mit evolventenförmig oder S-förmig verlaufenden Blechlagen auch dadurch zu einem festen Verbund zusammengefügt werden, daß lediglich die Enden an einem Mantelrohr angeschweißt oder angelötet werden, ohne daß die Metallfolien in ihrer Gesamtheit aufgeheizt werden. Bei diesem Herstellungsprozeß fehlt den Metallfolien, wenn sie weder homogengeglüht noch anderweitig wärmebehandelt wurden, eine genügend dicke Oxidschicht, wie sie für die Haftung einer späteren katalytisch aktiven Beschichtung wünschenswert ist.

Aufgabe der vorliegenden Erfindung ist daher die Schaffung eines Verfahrens zum Herstellen eines Wabenkörpers, welches weder eine Glühung am Ende des Walzprozesses noch am Ende des Herstellungsprozesses des Wabenkörpers erforderlich macht, sondern verfahrenstechnisch und energetisch in günstiger Weise eine Wärmebehandlung integriert in den eigentlichen Herstellungsprozeß des Wabenkörpers ermöglicht. Auch eine entsprechende Vorrichtung soll geschaffen werden.

Zur Lösung dieser Aufgabe dient ein Verfahren zum Herstellen eines Wabenkörpers aus mindestens einer Metallfolie, die aus mindestens zwei unterschiedlichen Schichten, insbesondere aus mit Aluminium walzplattiertem Stahl, aufgebaut ist, wobei die Metallfolie zumindest teilweise durch Umformen mit einer Struktur versehen wird und dann zu dem Wabenkörper geschichtet oder gewickelt wird, wobei die Metallfolie vor dem Umformen durch in ihr erzeugte ohm'sche Wärme wärmebehandelt wird. Wesentlich für die Erfindung ist dabei einerseits, daß die Wärmebehandlung, die nicht unbedingt ein vollständiges Homogenglühen sein muß, vor dem Umformen der Metallfolie zu den Wabenstrukturen und gegebenenfalls Mikrostrukturen erfolgt, um eine genügende Kaltverformbarkeit für diese Schritte zu erreichen. Außerdem ist wichtig, daß die Metallfolie durch in ihr selbst erzeugte ohm'sche Wärme erhitzt wird. Dieser Prozeß ist energetisch sehr günstig, da die Wärmeverluste sehr gering gehalten werden können. Ohm'sche Wärme entsteht immer dann, wenn in der Metallfolie ein elektrischer Strom fließt. Dies kann durch Anlegen einer Spannung an die Metallfolie oder durch Erzeugung von Wirbelströmen mittels Induktionsspulen erreicht werden. Besonders günstig ist die Erwärmung durch ohm'sche Wärme auch wegen der damit erzielbaren schnellen Aufheizung, die in einem kontinuierlichen Prozeß nur relativ kurze Wärmebehandlungsstrecken ohne Umlenkungseinrichtungen erforderlich macht und die bei einem diskontinuierlichen Prozeß relativ kurze Taktzeiten für den Wärmebehandlungsschritt zuläßt.

Für einen kontinuierlichen Prozeß eignet sich besonders die Erwärmung der durchlaufenden Metallfolie mittels Induktionsspulen. Für einen diskontinuierlichen Prozeß an einzelnen Abschnitten der Folie eignet sich besonders das Beaufschlagen der Abschnitte mit einer elektrischen Spannung zum Erzeugen eines hinreichend starken Stromes in der Folie.

Zur Vermeidung unkontrollierter Reaktionen der Folienoberfläche mit der Umgebungsluft ist es sinnvoll, die Wärmebehandlung in einer Kammer durchzuführen in der eine definierte Atmosphäre aufrechterhalten wird. Da aus der Literatur bekannt ist, daß sowohl eine übermäßige Oxidation, als auch die Einbindung von Nitriden in die Oxidoberfläche für die Haftung einer nachfolgenden Beschichtung nachteilig sind, ist es besonders günstig, die Kammer mit einer definierten Atmosphäre aus Inertgas, insbesondere einem Edelgas wie Argon, zu füllen, dem nur geringe Anteile an Sauerstoff zur langsamen gleichmäßigen Oxidation der Metallfolie beigemischt sind. Der Sauerstoffpartialdruck sollte dabei unter dem der Normalatmosphäre liegen, vorzugsweise nur einige Millibar betragen. Je nach der Maximaltemperatur, die die Folie bei der Wärmebehandlung erreicht, kann als Inertgas jedoch auch Stickstoff eingesetzt werden, da bis zu bestimmten Temperaturen eine Nitridbildung an der Oberfläche nicht zu befürchten ist. Wie bereits erwähnt, ist es nicht unbedingt erforderlich, die Metallfolie vollständig zu homogenisieren, da dies für den weiteren Fertigungsprozeß nicht erforderlich ist und im späteren Betrieb der Wabenkörper, beispielsweise als Abgaskatalysatoren in Kraftfahrzeugen, durch die dann häufig vorherrschenden Temperaturen ohnehin erreicht wird, wenn nicht schon beim Beschichtungsprozeß eine Homogenisierung durch das Kalzinieren einer Beschichtung erfolgt.

Für Wabenkörper, bei denen S-förmig oder evolventenförmig verlaufende Bleche nur mit ihren Enden an einem Mantelrohr fügetechnisch befestigt werden, ist es vorteilhaft, wenn die Enden frei von Oxiden bleiben, weil dies den fügetechnischen Prozeß vereinfacht und verbessert. Erfindungsgemäß ist es für solche Fälle besonders vorteilhaft, die Teilbereiche der Metallfolienoberfläche, die später an einem Mantelrohr befestigt werden sollen, gegenüber der umgebenden Atmosphäre während der Wärmebehandlung abzudecken oder zu kühlen, so daß diese Teilbereiche nicht oxidieren können. Dies kann durch mitlaufende Klammern im kontinuierlichen Prozeß geschehen, wobei dann die Folien in den nicht oxidierten Bereichen später durchgeschnitten und geschichtet werden. In einem diskontinuierlichen Prozeß können die Folien zunächst auf die gewünschten Langen geschnitten und dann an ihren Enden mit Haltern erfaßt werden, welche auch der Einleitung eines elektrischen Stromes dienen. Die Halter decken dabei die Endabschnitte der Teilstücke der Metallfolien ab bzw. kühlen diese, so daß eine Oxidation nur im übrigen Bereich der Folie stattfindet. Anschließend können dann die wärmebehandelten Teilstücke einer Umformung unterworfen, gestapelt und zu einem Wabenkörper geschichtet werden.

Eine entsprechende Vorrichtung zur Herstellung eines Wabenkörpers unter Einbeziehung eines Warmebehandlungsschrittes ist im Anspruch 11 angegeben. Vorteilhafte Ausgestaltungen dieser Vorrichtung sind in den davon abhängigen Ansprüchen angegeben und werden im folgenden anhand der Zeichnung näher erläutert. Es zeigen
- Fig. 1: eine schematische Darstellung einer Vorrichtung zur kontinuierlichen Wärmebehandlung als Teil einer nicht weiter dargestellten an sich bekannten Fertigungsanordnung und
- Fig. 2: die Warmebehandlungsstufe in einem diskontinuierlichen Prozeß.

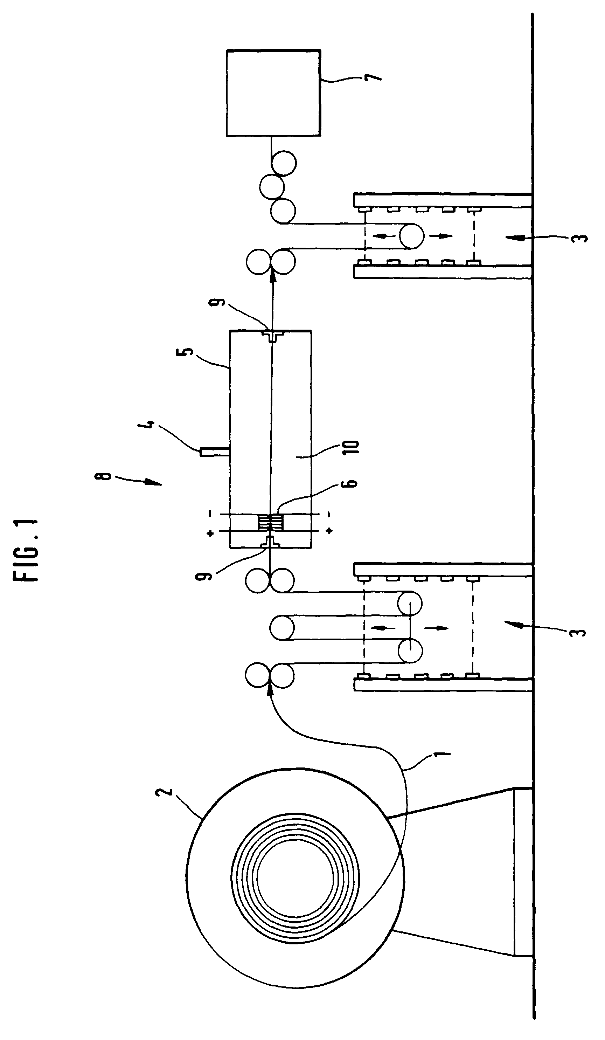

In der Figur 1 ist schematisch der erste Teil einer Fertigungsvorrichtung für Wabenkörper aus schichtweise aufgebauter Metallfolie 1 dargestellt. Mittels einer Folienabnahmevorrichtung 2 wird die Folie von einer Vorratsspule abgewickelt. Eine nicht dargestellte Transportvorrichtung, beispielsweise eine Wellwalze zur Herstellung von gewellten Strukturen, zieht die Metallfolie 1 von der Vorratsspule. Bevor die Metallfolie 1 zu irgendeiner Umformeinrichtung 7 geführt wird, durchläuft sie eine Metallfolientransportstrecke 8, wo neben der Metallfolie mindestens eine Induktionsspule 6, vorzugsweise aber zwei oder mehr sich jeweils gegenüberliegende Induktionsspulen 6 angeordnet sind. Um nicht nur die inneren Eigenschaften der Metallfolie 1, d.h. ihre Kaltverformbarkeit und andere chemische und physikalische Eigenschaften, zu beeinflussen, sondern auch um die Oberfläche gezielt zu behandeln, befindet sich die Metallfolientransportstrecke 8 im wesentlichen in einer Kammer 5, in die bzw. aus der die Metallfolie 1 durch jeweils einen Dichtungsspalt 9 geführt wird. In der Kammer 5 befindet sich eine definierte Atmosphäre 10, vorzugsweise aus Argon mit einer geringen Beimischung an Sauerstoff. Über eine Zuleitung 4 wird das definierte Gasgemisch zugeführt, wodurch die durch die chemische Reaktion und an den Dichtungsspalten 9 entstehenden Verluste ausgeglichen werden.

Da der Folientransport aufgrund bestimmter mechanischer Eigenschaften der Vorratsspule und der Transporteinrichtungen nicht gleichmäßig und ruckfrei erfolgen kann, sind vor und/oder hinter der Metallfolientransportstrecke 8 Ausgleichseinrichtungen 3 vorhanden, welche für einen gleichmäßigen Lauf der Folie und eine immer nahezu gleiche Zugspannung an der Folie sorgen. Die Induktionsspulen 6 sind so ausgelegt, daß sie die durchlaufende Metallfolie 1 auf eine zur Wärmebehandlung geeignete Temperatur bringen können. Je nach Anforderungen kann dies eine Temperatur zwischen 500 und 1000° Celsius sein, vorzugsweise eine Temperatur von etwa 600°, was knapp unterhalb des Schmelzpunktes von Aluminium liegt. Für besondere Fälle kann auch eine Wärmebehandlung bei z.B. 900°C erfolgen, wodurch schon eine teilweise Homogenisierung und eine schnelle Oxidation erreicht wird. Grundsätzlich kann zur Beschleunigung der Oxidation die Temperatur so hoch gewählt werden, daß die mechanische Festigkeit der Metallfolie gerade noch für den weiteren Transport ausreicht.

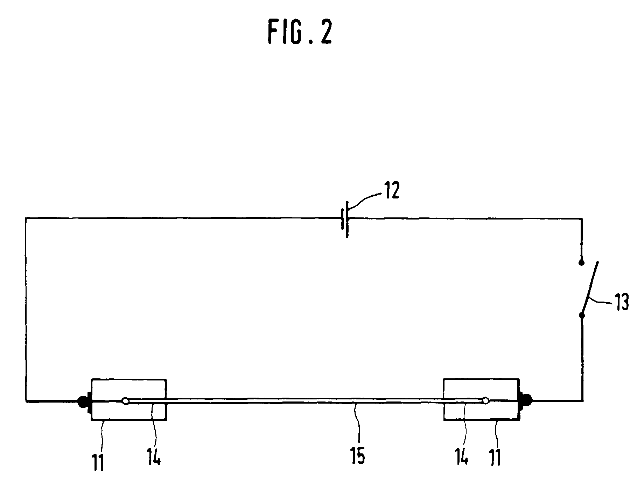

In Figur 2 ist schematisch die diskontinuierliche Wärmebehandlung von Metallfolienabschnitten 15 illustriert. Der Metallfolienabschnitt 15 wird in zwei Halter 11 eingespannt, welche mit einer Strom- bzw. Spannungsquelle 12 über einen Schalter 13 verbunden sind. Der Schalter 13 wird für eine vorgebbare Zeit geschlossen, wodurch ein Strom durch die Folie fließt und diese aufheizt. Dabei können die Halter 11 so geformt sein, daß sie die Endabschnitte 14 des Metallfolienabschnittes 15 gegenüber der Umgebungsatmosphäre abdecken oder zumindest die Enden kühlen. Auf diese Weise entstehen an den Abschnitten 14 keine Oxidschichten, die eine spätere Anbindung an ein Mantelrohr erschweren könnten. Natürlich kann auch die diskontinuierliche Wärmebehandlung in einer Kammer mit definierter Atmosphäre durchgeführt werden, völlig analog zu der anhand von Figur 1 beschriebenen.

Es sei noch angemerkt, daß auch die Aufheizung durch Einleiten von Strom in die Metallfolie kontinuierlich durchgeführt werden kann, wenn die Halter 11 beispielsweise die laufende Folie umfassen und mit dieser mitbewegt werden.

Die vorliegende Erfindung ermöglicht die Herstellung von Wabenkörpern aus walzplattierten Metallfolien auch mit Kaltverformungen von über 1 %, insbesondere beispielsweise von 3 % wie sie für Mikrostrukturen erforderlich sind, ohne daß ein energetisch oder apparativ aufwendiger vollständiger Homogenisierungsprozeß an der Metallfolie durchgeführt werden muß. Auch ist es möglich, auf der Metallfolie eine Oxidschicht für die bessere Haftung einer späteren katalytisch aktiven Beschichtung auszubilden, so daß vereinfachte Fügetechniken ohne spätere vollständige Aufheizung des ganzen Wabenkörpers angewendet werden können.

### Bezugszeichenliste:

- 1: Metallfolie
- 2: Folienabnahmevorrichtung
- 3: Ausgleichseinrichtung
- 4: Zuleitung
- 5: Kammer
- 6: Induktionsspule
- 7: Umformeinrichtung
- 8: Metallfolientransportstrecke
- 9: Dichtungsspalt
- 10: definierte Atmosphäre
- 11: Halter
- 12: Stromquelle, Spannungsquelle
- 13: Schalter
- 14: nicht oxidierender Abschnitt
- 15: Metallfolienabschnitt

## Patentansprüche

1. Verfahren zum Herstellen eines Wabenkörpers aus mindestens einer Metallfolie (1), die aus mindestens zwei unterschiedlichen Schichten, insbesondere aus mit Aluminium walzplattiertem Stahl, aufgebaut ist, wobei die Metallfolie (1) zumindest teilweise durch Umformen mit einer Struktur versehen wird und dann zu dem Wabenkörper geschichtet oder gewickelt wird,
**dadurch gekennzeichnet,**
daß die Metallfolie (1) vor dem Umformen durch in ihr erzeugte ohm'sche Wärme wärmebehandelt wird.

2. Verfahren nach Anspruch 1, dadurch gekennzeichnet, daß die ohm'sche Wärme durch Induktion (6) erzeugt wird.

3. Verfahren nach Anspruch 1, dadurch gekennzeichnet, daß die ohm'sche Wärme durch Beaufschlagen der Metallfolie mit einer elektrischen Spannung (12) erzeugt wird.

4. Verfahren nach Anspruch 1, 2 oder 3, dadurch gekennzeichnet, daß das Verfahren kontinuierlich an der zur weiteren Herstellung laufenden Metallfolie (1) durchgeführt wird.

5. Verfahren nach einem der vorhergehenden Ansprüche, dadurch gekennzeichnet, daß das Verfahren diskontinuierlich an Abschnitten der Metallfolie (1) durchgeführt wird.

6. Verfahren nach einem der vorhergehenden Ansprüche, dadurch gekennzeichnet, daß die Wärmebehandlung in einer definierten Atmosphäre (10) erfolgt.

7. Verfahren nach Anspruch 6, dadurch gekennzeichnet, daß die Atmösphäre (10) im wesentlichen eine Inertgasatmosphäre ist, insbesondere Stickstoff oder ein Edelgas.

8. Verfahren nach einem der Ansprüche 6 oder 7, dadurch gekennzeichnet, daß die Atmosphäre (10) einen Anteil Sauerstoff enthält, vorzugsweise einen geringeren Sauerstoffpartialdruck als in Normalatmosphäre aufweist.

9. Verfahren nach einem der vorhergehenden Ansprüche, dadurch gekennzeichnet, daß Teile (14) der Metallfolienoberfläche während der Wärmebehandlung gegenüber der umgebenden Atmoshäre (10) abgedeckt oder gekühlt sind, so daß sie nicht oxidieren können.

10. Verfahren nach Anspruch 9, dadurch gekennzeichnet, daß die Metallfolie (1) in Teilstücke unterteilt wird, wobei die Enden (14) der Teilstücke (15) während der Wärmebehandlung von Haltern (11) so umklammert werden, daß sie nicht mit der umgebenden Atmosphäre (10) in Kontakt kommen oder sich wegen der Kühlung durch die Halter (11) nicht auf eine zur Oxidation genügend hohe Temperatur erwärmen.

11. Vorrichtung zur Wärmebehandlung einer aus mindestens zwei unterschiedlichen Schichten bestehenden Metallfolie (1), insbesondere einer mit Aluminium walzplattierten Stahlfolie, enthaltend:
- mindestens eine Metallfolientransportstrecke (8), entlang derer die Metallfolie (1) geführt wird,

12. mindestens eine Einrichtung (6; 13, 14, 15) zur Erzeugung von ohm'scher Wärme in der Metallfolie (1).

13. Vorrichtung nach Anspruch 11, dadurch gekennzeichnet, daß die Vorrichtung Teil einer Herstellvorrichtung für Wabenkörper aus Metallfolien (1) ist und vor der ersten Umformeinrichtung (7) für die Metallfolie (1) angeordnet ist.

14. Vorrichtung nach Anspruch 11 oder 12, dadurch gekennzeichnet, daß die Vorrichtung eine Kammer (5) aufweist, in der sich die Metallfolie (1) während der Wärmebehandlung befindet, und in der eine definierte Atmosphäre (10) einstellbar ist.

15. Vorrichtung nach Anspruch 13, dadurch gekennzeichnet, daß in der Kammer (5) im wesentlichen eine Atmosphäre (10) aus Inertgas, vorzugsweise Stickstoff oder einem Edelgas, insbesondere Argon, einstellbar ist.

16. Vorrichtung nach Anspruch 13 oder 14, dadurch gekennzeichnet, daß in der Kammer (5) ein geringer Sauerstoffpartialdruck einstellbar ist, vorzugsweise ein geringerer als der von Normalatmoshäre.

17. Vorrichtung nach einem de Ansprüche 11 bis 15, dadurch gekennzeichnet, daß neben der Metallfolientransportstrecke (8) mindestens eine Induktionsspule (6) angeordnet ist, die in der Metallfolie (1) Wirbelströme erzeugen kann und diese dadurch aufheizt.

18. Vorrichtung nach Anspruch 16, dadurch gekennzeichnet, daß mindestens eine Induktionsspule (6) auf jeder Seite der Metallfolientransportstrecke (8) angeordnet ist.

19. Vorrichtung nach einem der Ansprüche 11 bis 17, dadurch gekennzeichnet, daß die vor und/oder hinter der Metallfolientransportstrecke (8) eine Ausgleichseinrichtung (3) zum Regulieren der Transportgeschwindigkeit und der auf die Metallfolie (1) wirkenden Zugspannung angeordnet ist.

20. Vorrichtung nach einem der Ansprüche 11 bis 15, dadurch gekennzeichnet, daß mindestens zwei Halter (11) zum Kontaktieren eines Metallfolienabschnittes (15) mit einer elektrischen Spannung (12) vorhanden sind.

21. Vorrichtung nach Anspruch 19, dadurch gekennzeichnet, daß die Halter (11) so geformt sind, daß sie Abschnitte (14) der Metallfolienoberfläche abdecken und/oder kühlen, so daß dort die Metallfolie (1) nicht oxidieren kann.

## Claims

1. Process for manufacturing a honeycomb body from at least one metal foil (1) which is constructed from at least two different layers, in particular from steel roll-bonded with aluminium, wherein the metal foil (1) is provided at least partly with a structure, by means of shaping, and is then laminated or wound to form the honeycomb body, characterised in that before shaping, the metal foil (1) is heat-treated by means of resistance heat generated within it.

2. Process according to claim 1, characterised in that the resistance heat is produced by induction (6).

3. Process according to claim 1, characterised in that the resistance heat is produced by application of an electric voltage (12) to the metal foil.

4. Process according to claim 1, 2 or 3, characterised in that the process is carried out continuously on the metal foil (1) passing to the later manufacturing steps.

5. Process according to one of the preceding claims, characterised in that the process is carried out discontinuously on sections of the metal foil (1).

6. Process according to one of the preceding claims, characterised in that the heat treatment takes place in a defined atmosphere (10).

7. Process according to claim 6, characterised in that the atmosphere (10) is essentially an inert gas atmosphere, in particular nitrogen or a noble gas.

8. Process according to one of claims 6 or 7, characterised in that the atmosphere (10) contains a proportion of oxygen, preferably a partial pressure of oxygen lower than in a standard atmosphere.

9. Process according to one of the preceding claims, characterised in that parts (14) of the metal foil surface are shielded or cooled with respect to the surrounding atmosphere (10) during the heat treatment so that they cannot oxidise.

10. Process according to claim 9, characterised in that the metal foil (1) is divided into sections, wherein during the heat treatment the ends (14) of the sections (15) are clamped by holders (11) so that they do not come into contact with the surrounding atmosphere (10) or because of cooling by means of the holder (11) do not heat up to a temperature sufficient for oxidation to take place.

11. Device for heat treatment of a metal foil (1) which is constructed from at least two different layers, in particular from steel roll-bonded with aluminium, containing:
- at least one metal foil transportation zone (8) along which the metal foil (1) is conveyed,
- at least one apparatus (6; 13, 14, 15) for generating resistance heat in the metal foil (1).

12. Device according to claim 11, characterised in that the device is part of a device for manufacturing honeycomb bodies from metal foils (1), and is arranged before the first apparatus (7) for shaping the metal foil (1).

13. Device according to claim 11 or 12, characterised in that the device is provided with a chamber (5), in which the metal foil (1) is located during the heat treatment, and in which a defined atmosphere (10) can be created.

14. Device according to claim 13, characterised in that in the chamber essentially an atmosphere (10) composed of inert gas, preferably nitrogen or of a noble gas, in particular argon, can be created.

15. Device according to claim 13 or 14, characterised in that a low partial pressure of oxygen can be created, preferably one which is lower than that of a standard atmosphere.

16. Device according to one of claims 11 to 15, characterised in that in addition to the metal foil transportation zone (8), at least one induction coil (6) is arranged which can produce eddy currents in the metal foil (1) and thereby heat it.

17. Device according to claim 16, characterised in that at least one induction coil (6) is arranged on each side of the metal foil transportation zone (8).

18. Device according to one of claims 11 to 17, characterised in that in before and/or after the metal foil transportation zone (8), a compensating device (3) for regulating the speed of transportation the tensile stress acting upon the metal foil (1) is arranged.

19. Device according to one of claims 11 to 15, characterised in that at least two holders (11) for contacting a metal foil section (15) with an electric voltage (12) are provided.

20. Device according to claim 19, characterised in that the holders (11) are formed so that they shield and/or cool sections (14) of the metal foil surface so that the metal foil (1) cannot oxidise in those places.

## Revendications

1. Procédé destiné à la fabrication d'un corps alvéolaire à partir d'au moins une feuille métallique (1), qui est constituée d'au moins deux différentes couches, notamment d'acier plaqué par laminage avec de l'aluminium, la feuille métallique (1) étant munie par déformation d'une structure, au moins partiellement, et étant ensuite empilée ou enroulée en un corps alvéolaire,
caractérisé en ce que
la feuille métallique (1) est soumise avant la déformation à un traitement thermique par de la chaleur ohmique produite en son sein.

2. Procédé selon la revendication 1, caractérisé en ce que la chaleur ohmique est produite par induction (6).

3. Procédé selon la revendication 1, caractérisé en ce que la chaleur ohmique est produite par l'application d'une tension électrique (12) à la feuille métallique.

4. Procédé selon la revendication 1, 2 ou 3, caractérisé en ce que le procédé est mis en oeuvre en continu sur la feuille métallique (1) qui est déplacée pour la suite de la fabrication.

5. Procédé selon l'une quelconque des revendications précédentes, caractérisé en ce que le procédé est mis en oeuvre en discontinu sur des sections de la feuille métallique (1).

6. Procédé selon l'une quelconque des revendications précédentes, caractérisé en ce que le traitement thermique est effectué dans une atmosphère définie (10).

7. Procédé selon la revendication 6, caractérisé en ce que l'atmosphère (10) est essentiellement une atmosphère de gaz inerte, notamment d'azote ou d'un gaz rare.

8. Procédé selon la revendication 6 ou 7, caractérisé en ce que l'atmosphère (10) contient une proportion d'oxygène, et a de préférence une pression partielle d'oxygène inférieure à celle de l'atmosphère normale.

9. Procédé selon l'une quelconque des revendications précédentes, caractérisé en ce que des parties (14) de la surface de la feuille métallique sont recouvertes pendant le traitement thermique par rapport à l'atmosphère ambiante (10) ou refroidies, de sorte qu'elles ne puissent pas s'oxyder.

10. Procédé selon la revendication 9, caractérisé en ce que la feuille métallique (1) est subdivisée en sections partielles, les extrémités (14) des sections partielles (15) étant enserrées par des retenues (11) pendant le traitement thermique de telle sorte qu'elles ne soient pas mises en contact avec l'atmosphère ambiante (10), ou qu'en raison du refroidissement par les retenues (11) ne soient pas portées à une température suffisamment élevée provoquant l'oxydation.

11. Dispositif destiné au traitement thermique d'une feuille métallique (1) constituée d'au moins deux différentes couches, notamment d'une feuille d'acier plaqué par laminage avec de l'aluminium, comportant :
- au moins une voie de transport (8) pour la feuille métallique, le long de laquelle la feuille métallique (1) est guidée,
- au moins un dispositif (6 ; 13, 14, 15) destiné à engendrer de la chaleur ohmique dans la feuille métallique (1).

12. Dispositif selon la revendication 11, caractérisé en ce que le dispositif fait partie d'un dispositif de fabrication de corps alvéolaires à partir de feuilles métalliques (1), et est disposé en amont du premier dispositif de déformation (7) de la feuille métallique (1).

13. Dispositif selon la revendication 11 ou 12, caractérisé en ce que le dispositif comporte une chambre (5) dans laquelle est placée la feuille métallique (1) pendant le traitement thermique, et dans laquelle peut être réglée une atmosphère définie (10).

14. Dispositif selon la revendication 13, caractérisé en ce qu'une atmosphère (10) constituée pour l'essentiel de gaz inerte, de préférence d'azote ou d'un gaz rare, notamment d'argon, peut être réglée dans la chambre (5).

15. Dispositif selon la revendication 13 ou 14, caractérisé en ce qu'une faible pression partielle d'oxygène, qui est de préférence plus faible que celle de l'atmosphère normale, peut être réglée dans la chambre (5).

16. Dispositif selon l'une des revendications 11 à 15, caractérisé en ce qu'au moins une bobine d'induction (6) est disposée à côté de la voie de transport (8) pour la feuille métallique, laquelle peut générer des courants de Foucault dans la feuille métallique (1) et chauffe de ce fait cette dernière.

17. Dispositif selon la revendication 16, caractérisé en ce qu'au moins une bobine d'induction (6) est disposée de chaque côté de la voie de transport (8) pour la feuille métallique.

18. Dispositif selon l'une des revendications 11 à 17, caractérisé en ce qu'un dispositif de compensation (3) destiné à réguler la vitesse de transport et la contrainte de traction exercée sur la feuille métallique (1) est disposé en amont et/ou en aval de la voie de transport (8) pour la feuille métallique.

19. Dispositif selon l'une des revendications 11 à 15, caractérisé en ce qu'il est prévu au moins deux retenues (11) destinés à appliquer une tension électrique (12) à une section (15) de la feuille métallique.

20. Dispositif selon la revendication 19, caractérisé en ce que les retenues (11) sont formées de telle sorte qu'elles recouvrent et/ou refroidissent des sections (14) de la surface de la feuille métallique, de sorte que la feuille métallique (1) ne puisse pas s'oxyder au niveau de ces emplacements.
